**Europäisches Patentamt**

**European Patent Office**

**Office européen des brevets**

(19)

(11) Veröffentlichungsnummer : **0 515 902 B1**

(12) ## EUROPÄISCHE PATENTSCHRIFT

(45) Veröffentlichungstag der Patentschrift :
16.08.95 Patentblatt 95/33

(51) Int. Cl.$^6$ : **G11B 5/704**

(21) Anmeldenummer : **92108037.0**

(22) Anmeldetag : **13.05.92**

(54) **Flexible magnetische Aufzeichnungsträger mit Rückschicht.**

(30) Priorität : **31.05.91 DE 4117980**

(43) Veröffentlichungstag der Anmeldung :
**02.12.92 Patentblatt 92/49**

(45) Bekanntmachung des Hinweises auf die
Patenterteilung :
**16.08.95 Patentblatt 95/33**

(84) Benannte Vertragsstaaten :
**DE FR GB NL**

(56) Entgegenhaltungen :
**EP-A- 0 322 826**
**US-A- 4 684 572**

(73) Patentinhaber : **BASF Magnetics GmbH**
**Dynamostrasse 3**
**D-68165 Mannheim (DE)**

(72) Erfinder : **Roller, Hermann**
**Elisabethstrasse 33**
**W-6700 Ludwigshafen (DE)**
Erfinder : **Heilmann, Peter, Dr.**
**Otto-Schmitt-Gross-Strasse 42**
**W-6702 Bad Duerkheim (DE)**

Erfinder : **Hitzfeld, Michael, Dr.**
**Kalkerdestrasse 20**
**W-6718 Gruenstadt (DE)**
Erfinder : **Stockburger, Dieter, Dr.**
**Phillipp-Krantz-Strasse 14**
**W-6718 Gruenstadt (DE)**
Erfinder : **Latzel, Werner, Dr.**
**Robert-Koch-Strasse 4**
**W-6704 Mutterstadt (DE)**
Erfinder : **Baur, Reinhold, Dr.**
**Eschbachstrasse 1**
**W-7601 Ortenberg (DE)**
Erfinder : **Engelhardt, Peter**
**Moerikeweg 20**
**W-6831 Plankstadt (DE)**
Erfinder : **Rothfuss, Edwin**
**Oberweierer Strasse 9**
**W-7609 Hohberg (DE)**
Erfinder : **Grau, Werner, Dr.**
**Tuchbleiche 5**
**W-6712 Bobenheim-Roxheim (DE)**
Erfinder : **Lenz, Werner, Dr.**
**Heinrich-Baermann-Strasse 14**
**W-6702 Bad Duerkheim (DE)**

(74) Vertreter : **Langfinger, Klaus-Dieter, Dr. et al**
**BASF Aktiengesellschaft,**
**Patentabteilung ZDX - C 6**
**D-67056 Ludwigshafen (DE)**

EP 0 515 902 B1

## Beschreibung

Die Erfindung betrifft flexible magnetische Aufzeichnungsträger, im wesentlichen bestehend aus einem bahnförmigen unmagnetischen Substrat, einer auf der einen Hauptseite des bahnförmigen Substrats aufgebrachten Magnetschicht und einer auf der gegenüberliegenden Hauptseite des Substrats aus einem polymeren Bindemittel und nichtmagnetischen Füllstoffen und Stützpigmenten gebildeten Rückschicht.

Es ist bekannt, flexible magnetische Aufzeichnungsträger mit nichtmagnetisierbarem, nicht-leitfähigen und/oder leitfähigen Stoffen enthaltenden Rückschichten zu versehen.

In der US-A 3 293 066 wird beschrieben, daß elektrostatische Aufladungen von Magnetbändern, die sich bei Aufzeichnungsgeräten mit hohen Bandgeschwindigkeiten bilden können, durch Aufbringen leitfähiger Rückschichten beseitigt und außerdem durch Rückschichten die Bandrückseiten verschleißfester gemacht werden können. Es ist außerdem aus der GB-A 1 197 661 und der US-A 4 135 031 bekannt, durch Aufbringen von Rückschichten mit einer vorgegebenen Oberflächenrauhigkeit die Wickeleigenschaften von Magnetbändern zu verbessern. Auch für Magnetkarten sind solche Rückschichten bekannt. Aus der EP-A 101 020 sind spezielle Bindemittelmischungen bekannt, welche insbeondere unter Zusatz von Ruß, Rückschichten mit ausgezeichneter Haft-, Verschleiß- und Klimafestigkeit erbringen.

Von besonderer Wichtigkeit sind derartige Rückschichten bei Videobändern, insbesondere bei solchen für den Heimvideobereich. So wird u.a. in der US-A 4 735 325 zur Verbesserung der Kratzfestigkeit und zur Reduzierung der Fehlerzahl eine Rückschicht vorgeschlagen, welche aus Ruß unterschiedlichen Teilchengröße sowie aus Füllstoffen mit einer Mohshärte $\geqq$ 8 dispergiert in einem polymeren Bindemittel besteht. Neben einer Verbesserung der Verschleißfestigkeit und einer Verringerung der Abrasivität dienen die vorgeschlagenen Rückschichten auch zur Verminderung der Lichtdurchlässigkeit des Bandmaterials, was insbesondere bei der Benutzung derartiger Bänder auf handelsüblichen Videorekordern erforderlich ist. Hierzu wird in der EP-A 105 471 eine Rückschicht auf Basis Bariumsulfat/$\alpha$-Eisen-(III)-Oxid mit oder ohne besondere Rußzusätze vorgeschlagen. Derart ausgerüstete Videobänder haben jedoch den Nachteil, daß sie sich nicht für eine an sich übliche Vervielfältigungstechnik, dem sogenannten thermomagnetischen Duplizierverfahren (TMD) eignen. Bei diesem TMD-Verfahren wird ein Chromdioxid als magnetisches Material enthaltendes magnetisches Aufzeichnungsmedium in Kontakt zu einem hochkoerzitiven mit der Aufzeichnung versehenen Mutterband gebracht und gleichzeitig die Chromdioxidmagnetschicht über den Curie-Punkt des Chromdioxid erwärmt.

Beim anschließenden Abkühlen unter den Curie-Punkt wird nun das Chromdioxid entsprechend dem Informationsmuster des Mutterbandes magnetisiert. Die Erwärmung der Chromdioxidmagnetschicht erfolgt im allgemeinen mit Hilfe eines Laserstrahles (üblich ist ein Kryptonlaser mit einer Wellenlänge von 1064 mm) durch die Rückseite des Magnetbandes. Dies bedeutet aber, daß eine vorhandene Rückschicht die Energie des Laserstrahls nicht wesentlich absorbieren darf.

Aufgabe der vorliegenden Verbindung war es deshalb, einen magnetischen Aufzeichnungsträger bereit zu stellen, dessen Rückschicht sowohl hinsichtlich der mechanischen Eigenschaften, wie Verschleißfestigkeit und Abrasivität, den Anforderungen genügt als auch gleichzeitig eine ausreichende Lichtdurchlässigkeit aufweist, so daß ein entsprechendes magnetisches Aufzeichnungsmedium auch für das TMD-Verfahren einsetzbar ist.

Es wurde nun gefunden, daß sich mit flexiblen magnetischen Aufzeichnungsträgern, im wesentlichen bestehend aus einem bahnförmigen unmagnetischen Substrat, einer auf der einen Hauptseite des bahnförmigen Substrats aufgebrachten Magnetschicht und eine auf der gegenüberliegenden Hauptseite des Substrats aus einem polymeren Bindemittel und nicht-magnetischen Zusatzstoffen gebildeten Rückschicht die Aufgabe lösen läßt, wenn die Rückschicht erhalten wird durch Dispergieren einer im wesentlichen aus einem organischen Polymeren und, bezogen auf die Rückschicht, 2,5 bis 25 Vol.-% eines Füllstoffs, 0,5 bis 3 Vol.-% eines Stützpigments und 1 bis 10 Vol.-% eines Polyolefins mit kugelförmiger Teilchenform, einer Dichte zwischen 0,9 bis 1,0 und einer mittleren Teilchengröße von 1 bis 1000 μm bestehenden Mischung, Auftragen der resultierenden Dispersion auf die der Magnetschicht gegenüberliegende Oberfläche des Substrats in einer solchen Schichtdicke, daß nach dem Verfestigen der Schicht eine Schichtdicke zwischen 0,1 und 2,0 μm resultiert.

Als Füllstoffe im Sinne der vorliegenden Erfindung eignen sich teilchenförmige Verbindungen wie Kieselsäure, insbesondere Fällungskieselsäure, Kalziumcarbonat, Bariumsulfat und/oder Gips mit einer mittleren Agglomeratgröße von 0,05 bis 4 μm. Geeignete Stützpigmente sind ebenfalls teilchenförmige Verbindungen aus der Gruppe Aluminiumoxid, $\alpha$-Eisen-(III)-oxid, Titandioxid, Zinkferrit und/oder Chromgrün mit einer mittleren Agglomeratgröße von 0,1 bis 0,5 μm. Wesentlicher Bestandteil der Rückschicht des erfindungsgemäßen magnetischen Aufzeichnungsträgers ist der Anteil des Polyolefins. Diese Polymere weisen eine kugelige Teilchenform mit einer mittleren Teilchengröße zwischen 1 bis 1000, insbesondere 8 bis 800 und vorteilhafterweise 30 bis 500 μm auf. Als besonders vorteilhaft haben sich ld-Polyolefine mit einem mittleren Molekulargewicht von 3000 bis 25000 herausgestellt, die eine Dichte von 0,9 bis 1,0 g/cm³ aufweisen.

Die Herstellung der die Rückschicht des erfindungsgemäßen magnetischen Aufzeichnungsträgers bildenden Dispersion erfolgt nach an sich bekanntem Verfahren.

Als organisches Polymeres für die Rückschicht eignen sich die bei der Herstellung von magnetischen Aufzeichnungsträger bekannten Bindemittel. Dies sind in üblichen Lösungsmitteln lösliche Copolyamide, Polyvinylformale, Polyurethanelastomere, Mischungen von Polyisocyanaten und höhermolekularen Polyhydroxylverbindungen, Vinylchloridpolymerisate mit über 60 % an Vinylchlorid-Molekülbausteinen, ein copolymerisiertes Vinylchlorid mit einer oder mehreren ungesättigten Carbonsäuren mit 3 bis 5 C-Atomen als Comonomerem oder hydroxylgruppenhaltige Vinylchloridcopolymerisate die durch partielle Verseifung von Vinylchlorid-Vinylester-Copolymerisaten oder direkte Copolymerisation von Vinylchlorid mit hydroxylhaltigen Monomeren, wie Allylalkohol oder 4-Hydroxybutyl- oder 2-Hydroxyethyl-(meth)-Acrylat hergestellt werden können. Ferner sind als Bindemittel geeignet Abmischungen von einem oder mehreren Polyurethanelastomeren mit Polyvinylformalen, Phenoxyharzen und Vinylchloridcopolymerisaten der obenangegebenen Zusammensetzung. Als organische Polymere werden insbesondere Abmischungen von Polyurethanelastomeren mit Phenoxyharzen und von Polyurethanelastomeren mit Vinylchloridpolymerisaten bevorzugt.

Als Lösungsmittel für die Herstellung und Verarbeitung der Polymeren werden vorzugsweise cyclische Ether, wie Tetrahydrofuran und Dioxan und Ketone, wie Methylethylketon, Cyclohexanon, verwendet. Selbstverständlich können Polyurethane auch in anderen stark polaren Lösungsmitteln, wie Dimethylformamid, Pyrrolidon, Dimethylsulfoxid oder Ethylenglykolacetat gelöst werden. Ebenso ist es möglich, die genannten Lösungsmittel mit Aromaten, wie Toluol oder Xylol und Estern, wie Ethyl- oder Butylacetat, zu mischen.

Zur Dispergierung werden die teilchenförmigen Komponenten zusammen mit dem gelösten organischen Polymeren und an und für sich bekannten und üblichen Dispergierhilfsmitteln, wie Sojalecithin, gesättigten und ungesättigten, geradkettigen und verzweigten Fettsäuren, Fettsäuresalze, quartäre Ammoniumverbindungen und Phosphorsäureabkömmlinge gemischt und in bekannten Dispergiereinrichtungen verarbeitet. Außerdem kann es zweckmäßig sein diesen Rückschichten noch übliche Gleitmittel wie Fettsäure, Fettsäureester, Siliconöle oder Additive auf Fluorbasis zuzusetzen.

Die Dispersionsherstellung erfolgt in Kugelmühlen, vertikalen oder horizontalen Rührwerkskugelmühlen auf üblichem Weg. Die Rückschicht wird bevorzugt nach dem Rasterwalzenverfahren aufgebracht. Zur Verdampfung der Lösungsmittel und Trocknung bzw. Härtung der Rückschicht wird diese durch ein Wärmekanal geführt. Dabei ist es möglich, sowohl Magnet- und Rückschichtdispersionen in einem Arbeitsgang als auch hintereinander aufzutragen. Die beschichteten Folien können noch, falls erforderlich, auf üblichen Maschinen durch Hindurchführen zwischen geheizten und polierten Walzen, ggf. bei Anwendung von Druck, geglättet und verdichtet werden. Die Dicke der Rückschicht beträgt weniger als 2,0, insbesondere weniger als 1,5 und vorzugsweise 0,3 bis 0,7 µm.

In einer vorteilhaften Ausführung der erfindungsgemäßen magnetischen Aufzeichnungsträgern ist die Rückschicht zusammengesetzt aus 15 bis 25 insbesondere 20 bis 25 Vol.-% einer Fällungskieselsäure mit einem $SiO_2$-Gehalt von 98 bis 99,5 %, einem pH-Wert von 5 bis 7, sowie einer Dichte von 1,9 g/cm³, 0,5 bis 3, vorzugsweise 1,5 bis 2,25 Vol.-% eines kubischen Zinkferrits mit einer mittleren Teilchengröße Von 0,1 bis 0,5 µm, eines kugelförmigen $\alpha$-$Fe_2O_3$ oder eines $Al_2O_3$ und 1 bis 10, vorzugsweise 2 bis 5 Vol.-% eines kugelförmigen Id-Polyolefins mit einem mittleren Teilchendurchmesser von 8 bis 800, vorzugsweise 30 bis 500 µm sowie aus 20 bis 40, vorzugsweise 25 bis 35 Vol.-% eines linearen Polyesterurethans aus Adipinsäure, 1,4-Butandiol und 4,4-Diisocyanatdiphenylmethan, 15 bis 25, vorzugsweise 18 bis 20 Vol.-% eines Polyphenoxyharzes aus Bisphenol und Epichlorhydrin sowie 10 bis 25, insbesondere 15 bis 20 Vol.-% eines Polyisocyanatharzes. Neben den 2 Vol.-% nicht übersteigenden Mengen eines bekannten Dispergierhilfsmittels sowie eines Gleitmittels kann es ggf. zweckmäßig sein der Dispersion noch bis zu 1,5 Vol.-% eines Rußes zuzusetzen.

Die erfindungsgemäßen magnetischen Aufzeichnungsträger zeigen aufgrund der speziellen Rückschicht ein außerordentlich vorteilhaftes Laufverhalten. Dank der mechanischen Stabilität und Verschleißfestigkeit der Rückseite derartiger magnetischer Aufzeichnungsträger weisen entsprechende Videobänder eine stark reduzierte Fehlerzahl gegenüber solchen nach dem Stand der Technik auf. Sofern die Magnetschicht der erfindungsgemäßen magnetischen Aufzeichnungsträger auf Basis Chromdioxid hergestellt ist, eignen sich derartige Magnetbänder insbesondere für das TMD-Verfahren. Die Infrarotdurchlässigkeit dieser Rückschicht gewährleistet außerdem eine weitgehend verlustfreie, d. h. ohne eine gegenüber Magnetbändern ohne Rückschicht nötige Erhöhung des Laserstroms mögliche Erhitzung des Chromdioxids in der Magnetschicht über den Curie-Punkt.

Die Erfindung sei anhand folgender Beispiele im Vergleich zu Versuchen nach dem Stand der Technik näher erläutert. Die in den Beispielen und Vergleichsversuchen genannten Teile und Prozente beziehen sich, soweit nicht anders angegeben ist, auf das Volumen.

Beispiel 1

In eine diskontinuierliche Rührwerksmühle mit einem Volumen von 10 000 Teilen wurden 3 325 Teile Zirkondioxidkugeln mit einem Durchmesser von 1,0 - 1,25 mm, 71,5 Teile einer Fällungskieselsäure mit einer mittleren Agglomeratgröße von 3 μm, 6,8 Teile eines kubischen Zinkferrits mit einer mittleren Teilchengröße von 0,12 μm, 9,2 Teile eines Polyolefins mit einem mittleren Molekulargewicht von 3000 und einem mittleren kugelförmigen Teilchendurchmesser von 500 μm, 103 Teile einer 14,75 %igen Lösung eines Vinylchloridcopolymeren mit einem mittleren Molekulargewicht von 35 000 und einem Hydroxylgehalt von 1,8 Gew.-% in einem Gemisch aus 45,74 Teilen Tetrahydrofuran und 39,51 Teilen Dioxan, 162 Teile einer 10,62 %igen Lösung eines linearen Polyesterurethanharzes, hergestellt aus Adiquinsäure, Butandiol - 1,4 und 4,4 - Diisocyanatodiphenylmethan in einem Gemisch aus 47,95 Teilen Tetrahydrofuran und 41,43 Teilen Dioxan, 2,8 Teile einer isomeren $C_{18}$-Carbonsäure, 848 Teile eines Gemisches aus 455 Teilen Tetrahydrofuran und 393 Teilen Dioxan, eingefüllt. Dann wurde die Rührwerksmüle verschlossen und der Inhalt 6 Stunden dispergiert. Danach wurde die Mühle wieder geöffnet und noch 14,52 Teile einer 9,26 %igen Lösung von Dibutylzinnlaurat in einem Gemisch aus 48,68 Teilen Tetrahydrofuran und 42,06 Teilen Dioxan, 5,7 Teile einer 8,5 %igen Lösung eines Fluoradditives in einem Gemisch aus 49,10 Teilen Tetrahydrofuran und 42,4 Teilen Dioxan, 751 Teile einer 10,62 %igen Lösung des zuvor beschriebenen linearen Polyesterurethanharzes in einem Gemisch aus 47,95 Teilen Tetrahydrofuran und 41,43 Teilen Dioxan, 414,75 Teile einer 14,75 %igen Lösung des zuvor beschriebenen Vinylcopolymeren in einem Gemisch aus 45,74 Teilen Tetrahydrofuran und 39,51 Teilen Dioxan, 1807,5 Teile eines Gemisches aus 969,65 Teilen Tetrahydrofuran und 837,85 Teilen Dioxan, eingefüllt und weitere 3 Stunden gemahlen.

Die Dispersion wurde nun aus der Mühle entnommen. Um die Schicht nach dem Auftrag zu vernetzen, wurden auf 1000 Teile der Dispersion 30 Teile einer 41,6 %igen Lösung eines Isocyanatharzes aus 1 Mol Trimethylolpropan und 3 Molen Toluylendiisocyanat in 58,4 Teilen Tetrahydrofuran, 15 Minuten lang zugerührt. Nach Filtration durch ein Papierfilter wurde die Dispersion mittels einer Rasterwalze auf eine 15 μm Polyethylenterephthalatfolie aufgebracht und im Trockenkanal der Beschichtungsmaschine getrocknet. Die erzielte Rückschichtdicke betrug 0,5 μm.

Die Rückschicht war sehr gleichmäßig und ohne jegliche Streifenbildung aufgetragen. Der Pigmentvolumenanteil der Kieselsäure in der Schicht betrug 22,48 %, der des Zinkferrits 2,14 % und der des Polyolefins 2,9 %. Zur weiteren Verarbeitung wurde anschließend die Magnetschicht mit $CrO_2$ als magnetischem Pigment in herkömmlicher Weise auf die der Rückschicht gegenüberliegenden Folienseite 2,5 μm dick aufgetragen. Nach Kalandrierung wurde die Folienbahn in 12,7 mm breite (1/2 Zoll)Bänder aufgeschnitten. Die Bänder wurden nun wie folgt geprüft:

Messung des Laserstroms zur Erzielung einwandfreier Kopien. Dieser darf nicht höher als bei einem rückgußfreien Band sein, da der Laserstrombedarf die Lebensdauer der Laserlampe begrenzt. Zur Messung der Verschleißfestigkeit der Rückschicht wurde eine Endlosschleife des Versuchsbandes 8 min lang mit der Rückseite über ein Reinigungsvlies (v = 20 cm/s) unter einer Spannung von 60p geführt. Die Anzahl der Kratzer vor und nach dem Test wurde optisch ermittelt. Je weniger Kratzer vorhanden oder während des Tests entstanden waren, desto verschleißfester ist die Rückschicht. Dieser Test ist für die Betriebssicherheit der Bänder in der TMD-Kopiermaschine wichtig, in welcher die Bänder ständig über ein Vlies geführt werden. Ablagerungen führen zu Fehlern und machen einen ständigen Wechsel des Reinigungsvlieses erforderlich. Die Ergebnisse sind in der Tabelle 1 angegeben.

Beispiel 2

Es wurde wie in Beispiel 1 beschrieben verfahren, jedoch wurde anstelle des kubischen Zinkferrits kugelförmiges $\alpha$-$Fe_2O_3$ mit einer mittleren Teilchengröße von 0,3 μm eingesetzt und die Pigmentvolumenkonzentration für die Kieselsäure betrug 24,86 %, die des $\alpha$-$Fe_2O_3$ 1,05 % und des Polyolefins 2,85 %. Die Rückschicht wurde gleichfalls 0,5 μm dick aufgetragen. Die Ergebnisse sind der Tabelle 1 angegeben.

Beispiel 3

Es wurde wie in Beispiel 1 beschrieben verfahren, jedoch wurde anstelle des kubischen Zinkferrits ein $\alpha$-$Al_2O_3$ mit einer durchschnittlichen Teilchengröße von 0,1 - 0,2 μm eingesetzt. Die Pigmentvolumenkonzentration betrugen für die Kieselsäure 24,81 %, für das $\alpha$-$Al_2O_3$ 1,23 % und für das Polyolefin 2,85 %. Die Ergebnisse sind in der Tabelle 1 angegeben.

4

Beispiel 4

Anstelle des im Beispiel 1 angegebenen VC-Copolymeren wurden in der Dispergierphase I 107 Teile einer 16,83 %igen Lösung eines Polyphenoxyharzes aus Biphenol A und Epichlorhydrin mit 6 Gew.-% Hydroxylgruppen in einem Gemisch aus 44,62 Teilen Tetrahydrofuran und 38,55 Teilen Dioxan eingefüllt und nochmals 431 Teile derselben Lösung in Phase II. Die übrigen Parameter blieben unverändert. Die Pigmentvolumenkonzentrationen betrugen in der Schicht für die Kieselsäure 21,05 %, für den kubischen Zinkferrit 1,99 % und für das Polyolefin 2,71 %. Die Ergebnisse sind in der Tabelle angegeben.

Beispiel 5

Es wurde wie in Beispiel 4 beschrieben verfahren, jedoch wurde anstelle des im Beispiel 1 genannten Polyolefins mit einem mittleren Molekulargewicht von 3000 9,2 Teile mit einem mittleren Molekulargewicht von 6000, einen mittleren kugelförmigen Teilchendurchmesser von 30 µm und einer Dichte von 0,92 g/cm$^3$ eingesetzt. Die Pigmentvolumenkonzentrationen in der Schicht betrugen für die Kieselsäure 21,06 %, für den kubischen Zinkferrit 2,0 % und für das Polyolefin 2,63 %. Die Ergebnisse sind in der Tabelle 1 angegeben.

Beispiel 6

Es wurde wie in Beispiel 4 beschrieben verfahren, jedoch wurde anstelle des im Beispiel 1 genannten Polyolefins 9,2 Teile eines polymeren, polyolefinischen Füllers mit einem mittleren Molekulargewicht von 6 500, einem mittleren Teilchendurchmesser von 300 µm und einer Dichte von 0,96 g/cm$^3$ eingesetzt. Die Pigmentvolumenkonzentrationen betrugen für die Kieselsäure 21,06 %, für den kubischen Zinkferrit 2,0 % und für das Polyolefin 2,63 %. Die Ergebnisse sind in der Tabelle 1 angegeben.

Beispiel 7

Es wurde wie in Beispiel 4 beschrieben verfahren. Anstelle der in Beispiel 1 verwendeten 9,2 Teile des Polyolefins wurden vom gleichen Typ jedoch 18,7 Teile eingesetzt. Die Pigmentkonzentrationen betrugen für die Kieselsäure 20,49 %, für den kubischen Zinkferrit 1,95 % und für den polymeren Füller 5,29 %. Die Ergebnisse sind in der Tabelle 1 angegeben.

Beispiel 8

Es wurde wie in Beispiel 4 beschrieben verfahren, jedoch wurde anstelle des in Beispiel 1 angegebenen Polyolefins mit einer mittleren kugelförmigen Teilchengröße von 500 µm 9,0 Teile, mit einer mittleren kugelförmigen Teilchengröße von 8 µm und einer Dichte von 0,94 g/cm$^3$ eingesetzt. Die Pigmentvolumenkonzentration betrug für die Kieselsäure 21,06 %, für den kubischen Zinkferrit 2,0 % und für den polymeren, polyolefinischen Füller 2,63 %. Die Ergebnisse sind in der Tabelle 1 angegeben.

Beispiel 9

Es wurde wie in Beispiel 4 beschrieben verfahren, jedoch wurde ein hochleitfähiger Ruß mit einer spezifischen Oberfläche von 1000 m$^2$/g mitverwendet. Anstelle der 71,5 Teile der Fällungskieselsäure wurden nur 67,4 Teile sowie 6,8 Teile des kubischen Zinkferrits und 4,5 Teile des hochleitfähigen Rußes, eingefüllt.
Die Pigmentvolumenkonzentration betrug für die Kieselsäure 20,25 %, für den kubischen Zinkferrit 2,05 %, für den Ruß 1,39 % und für das Polyolefin 2,79 %. Die Ergebnisse sind in der Tabelle 1 angegeben.

Beispiel 10

Es wurde wie in Beispiel 4 beschrieben verfahren, jedoch wurden anstelle der 71,5 Teile der Fällungskieselsäure, 31,8 Teile eines feinteiligen 0,11 µm großen BaSO$_4$ mit einer Ölaufnahme von 24 ml/100 g verwendet. Alle übrigen Parameter blieben unverändert. Die Pigmentvolumenkonzentration betrug für das BaSO$_4$ 13,84 %, für den kubischen Zinkferrit 2,98 % und für den polymeren, polyolefinischen Füller 4,05 %. Die Ergebnisse sind in der Tabelle 1 angegeben.

Vergleichsversuch 1

Es wurde eine Rückschichtdispersion gemäß Beispiel 1 der EP-A 101 020 jedoch mit dem Unterschied hergestellt, daß die Dispergierung in einer diskontinuierlichen Rührwerksmühle von 10 000 Volumenanteilen und mit 3325 Teilen Zirkondioxidkugeln mit einem Durchmesser von 1,0 - 1,25 mm erfolgte, hierzu wurden 126,3 Teile Ruß, 63,15 Teile einer organisch ausgerüsteten Kieselsäure, 8 Teile kubischer Zinkferrit, 2194,5 Teile eines Gemisches aus 1223,6 Teilen Tetrahydrofuran und 970,9 Teilen Dioxan, 10,2 Teile Stearinsäure, 553,3 Teile einer 16,36 %igen Lösung eines Polyurethanharzes aus Trimethylolpropan/Hexandiol 1,6 = 44 : 56 in einem Gemisch aus 44,87 Teilen Tetrahydrofuran und 38,77 Teilen Dioxan, 838,6 Teile einer 16,83 %igen Lösung eines Polyphenoxyharzes aus Biphenol A und Epichlorhydrin mit 6 Gew.-% Hydroxylgruppen in einem Gemisch aus 44,62 Teilen Tetrahydrofuran und 38,55 Teilen Dioxan eingefüllt.

Dann wurde der Ansatz 6 Stunden gemahlen und anschließend noch 1283 Teile einer 10,25 %igen Lösung eines gesättigten Polyesterharzes, hergestellt aus Terephthal-Isophthalsäure (1:2) und Ethylenglykol, in einem Gemisch aus 48,15 Teilen Tetrahydrofuran und 41,6 Teilen Dioxan, 871,6 Teile einer 10,62 %igen Lösung, eines linearen Polyesterurethanharzes, hergestellt aus Adipinsäure, Butandiol-1,4 und 4,4′ -Diisocyanatodiphenylmethan, in einem Gemisch aus 47,95 Teilen Tetrahydrofuran und 41,43 Teilen Dioxan, 11,6 Teile Butylsteart und 478,5 Teile einer 41,6 %igen Lösung eines Isocyanatharzes aus 1 Mol Trimethylolpropan und 3 Molen Tolylendiisocyanat in 58,4 Teilen Tetrahydrofuran zugegeben. Nach weiterem 15 minütigen Rühren war die Homogenisierung beendet und die Rückschichtdispersion wurde durch ein Papierfilter filtriert und mittels einer Rasterwalze auf eine 15 µm Polyethylenterephthalatfolie aufgebracht und im Trockenkanal der Beschichtungsmaschine getrocknet. Die Dicke der Rückschicht betrug 0,5 µm. Die Pigmentvolumenkonzentrationen betrugen in der Schicht 14,3 % für Ruß, 5,81 % für die Kieselsäure und 0,74 % für den kubischen Zinkferrit. Zur weiteren Verarbeitung wurde die Magnetschicht in herkömmlicher Weise auf die der Rückschicht gegenüberliegenden Folienseite 2,5 µm dick aufgetragen. Nach Kalandrierung und Schneiden des Blockes in 1/2 breite Bänder wurden diese in gleicher Weise wie unter Beispiel 1 geschildert geprüft. Die Ergebnisse sind in der Tabelle 1 angegeben.

Vergleichsversuch 2

Es wurde wie in Beispiel 1 beschrieben verfahren, jedoch wurden anstelle des kubischen Zinkferrits und des Polyolefins 81,0 Teile der Fällungskieselsäure und 8,85 Teile des hochleitfähigen in Beispiel 9 beschriebenen Rußes verwendet. Die 0,5 µm dicke Schicht enthielt Fällungskieselsäure in einer Pigmentvolumenkonzentration von 21,56 % und Ruß von 2,47 %. Die Weiterverarbeitung und Prüfung erfolgte wie beschrieben. Die Ergebnisse sind in der Tabelle 1 angegeben.

Vergleichsversuch 3

Bei diesem Versuch wurde keine Rückschicht, sondern lediglich die Magnetschicht mit $CrO_2$ als magnetischem Material mit einer Koerzitivfeldstärke von 51 kA/m aufgetragen. Die Weiterverarbeitung und Prüfung erfolgte wie bei den übrigen Beispielen. Die Ergebnisse sind in der Tabelle 1 angegeben.

Tabelle 1

| | Beispiele | | | | | | | | | | Vergleichsversuche | | |
|---|---|---|---|---|---|---|---|---|---|---|---|---|---|
| | 1 | 2 | 3 | 4 | 5 | 6 | 7 | 8 | 9 | 10 | 1 | 2 | 3 |
| Laserstrom in Ampère beim Standard TMD-Kopiervorgang | 32 | 32 | 32 | 32 | 32 | 32 | 32 | 32 | 33 | 32 | nicht möglich | 35 | 32 |
| Kratzer | | | | | | | | | | | | | |
| vor Test | 0 | 0 | 0 | 1 | 2 | 2 | 0 | 4 | 1 | 2 | 1 | 10 | 2 |
| nach Test | 0 | 1 | 1 | 2 | 3 | 7 | 2 | 11 | 3 | 5 | 3 | >50 | >50 |

EP 0 515 902 B1

Beispiel A

Auf einer Standard-TMD-Kopiervorrichtung wurde auf Videobänder, erhalten gemäß Beispiel 1, Beispiel 4 und Vergleichsversuch 3 (Magnetband ohne Rückschicht) eine Bildaufzeichnung übertragen. Die Messung der Videoeigenschaften erfolgte derart, daß das Videoband den Vergleichsversuch 3 als Bezugsband, d.h. zu OdB, eingesetzt wurde. Gemessen wurde das Signal-Rausch-Verhältnis (S/N), die Farbstörmodulation (FSM) und der HF-Pegel. Die Ergebnisse sind in Tabelle 2 angegeben.

### Tabelle 2

|                | Beispiel A/1 | Beispiel A/4 |
|----------------|--------------|--------------|
| Videowerte *   |              |              |
| S/N [dB]       | +2           | +1           |
| FSM [dB]       | +2,5         | +2           |
| HF-Pegel [dB]  | +2           | +2           |

## Patentansprüche

1. Flexible magnetische Aufzeichnungsträger, im wesentlichen bestehend aus einem bahnförmigen unmagnetischen Substrat, einer auf der einen Hauptseite des bahnförmigen Substrats aufgebrachten Magnetschicht und einer auf der gegenüberliegenden Hauptseite des Substrats aus einem polymeren Bindemittel und nicht-magnetischen Zusatzstoffen gebildeten Rückschicht, dadurch gekennzeichnet, daß die Rückschicht erhalten wird durch Dispergieren einer im wesentlichen aus einem organischen Polymeren und, bezogen auf die Rückschicht, 2,5 bis 25 Vol.-% eines Füllstoffs, 0,5 bis 3 Vol.-% eines Stützpigments und 1 bis 10 Vol.-% eines Polyolefins mit kugelförmiger Teilchenform, einer Dichte zwischen 0,9 bis 1,0 und einer mittleren Teilchengröße von 1 bis 1000 µm bestehenden Mischung, Auftragen der resultierenden Dispersion auf die der Magnetschicht gegenüberliegenden Oberfläche des Substrats in einer solchen Schichtdicke, daß nach dem Verfestigen der Schicht eine Schichtdicke zwischen 0,1 und 2,0 µm resultiert.

2. Flexible magnetische Aufzeichnungsträger gemäß Anspruch 1, dadurch gekennzeichnet, daß der Füllstoff mindestens eine teilchenförmige Verbindung aus der Gruppe $SiO_2$, $CaCO_3$, $BaSO_4$, $CaSO_4$ mit einer mittleren Agglomeratgröße von 0,05 bis 4 µm ist.

3. Flexibler magnetischer Aufzeichnungsträger gemäß Anspruch 1, dadurch gekennzeichnet, daß das Stützpigment mindestens eine teilchenförmige Verbindung aus der Gruppe $Al_2O_3$, $\alpha\text{-}Fe_2O_3$, $TiO_2$, kubischer Zinkferrit und $Cr_2O_3$ mit einer mittleren Agglomeratgröße von 0,1 bis 0,5 µm ist.

4. Flexible magnetische Aufzeichnungsträger gemäß Anspruch 1, dadurch gekennzeichnet, daß das Polyolefin ein Id-Polyolefin mit einem mittleren Molekulargewicht von 3000 bis 25000 ist.

5. Flexible magnetische Aufzeichnungsträger gemäß Anspruch 1, dadurch gekennzeichnet, daß die für die Rückschicht eingesetzte Mischung noch bis zu 1,5 Vol.-% Ruß enthält.

## Claims

1. A flexible magnetic recording medium consisting essentially of a web-like nonmagnetic substrate, a magnetic layer applied to one main side of the web-like substrate and a backing layer formed on the opposite main side of the substrate from a polymeric binder and non-magnetic additives, wherein the backing layer is obtained by dispersing a mixture essentially consisting of an organic polymer and, based on the backing layer, from 2.5 to 25% by volume of a filler, from 0.5 to 3% by volume of an auxiliary pigment and from 1 to 10% by volume of a polyolefin having a spherical particle shape, a density of from 0.9 to 1.0 and a mean particle size of from 1 to 1,000 µm and by applying the resulting dispersion to that surface of the substrate which is opposite the magnetic layer, in a layer thickness such that, after solidification of the layer, a layer thickness of from 0.1 to 2.0 µm results.

2.  A flexible magnetic recording medium as claimed in claim 1, wherein the filler is at least one particulate compound selected from the group consisting of $SiO_2$, $CaCO_3$, $BaSO_4$ and $CaSO_4$ having a mean agglomerate size of from 0.05 to 4 µm.

3.  A flexible magnetic recording medium as claimed in claim 1, wherein the auxiliary pigment is at least one particulate compound selected from the group consisting of $Al_2O_3$, $\alpha$-$Fe_2O_3$, $TiO_2$, cubic zinc ferrite and $Cr_2O_3$ having a mean agglomerate size of from 0.1 to 0.5 µm.

4.  A flexible magnetic recording medium as claimed in claim 1, wherein the polyolefin is a low density polyolefin having an average molecular weight of from 3,000 to 25,000.

5.  A flexible magnetic recording medium as claimed in claim 1, wherein the mixture used for the backing layer also contains not more than 1.5% by volume of carbon black.

**Revendications**

1.  Support d'enregistrement magnétique flexible, constitué essentiellement d'un substrat magnétique en forme de bande, d'une couche magnétique déposée sur une face principale du substrat en forme de bande et d'une couche de dos formée d'un liant polymère et d'additifs amagnétiques située sur la face principale opposée, caractérisé par le fait que la couche de dos est obtenue par dispersion d'un mélange consistant essentiellement d'un polymère organique et, rapporté à la couche de dos, 2,5 à 25 % en volume d'une charge de remplissage, 0,5 à 3 % en volume d'un pigment d'appui et 1 à 10 % en volume d'un polyoléfine à particules sphériques, de densité entre 0,9 et 1,0 et de taille moyenne de particule entre 1 et 1000 µm, dépôt de la dispersion résultante sur la surface du substrat opposée à la couche magnétique en une épaisseur de couche telle que, après solidification, la couche présente une épaisseur de 0,1 à 2,0 µm.

2.  Support d'enregistrement magnétique flexible selon la revendication 1, caractérisé par le fait que la charge de remplissage est au moins un liant de forme parcellaire du groupe $SiO_2$, $CaCO_3$, $BaSO_4$, $CaSO_4$ ayant une taille moyenne d'agglomérat de 0,05 à 4 µm.

3.  Support d'enregistrement magnétique flexible selon la revendication 1, caractérisé par le fait que le pigment d'appui est au moins un liant de forme parcellaire du groupe $Al_2O_3$, $\alpha$-$Fe_2O_3$, $TiO_2$, ferrite cubique de zinc et $Cr_2O_3$ ayant une taille moyenne d'agglomérat de 0,1 à 0,5 µm.

4.  Support d'enregistrement magnétique flexible selon la revendication 1, caractérisé par le fait que la polyoléfine est une polyoléfine-ld de masse moléculaire moyenne comprise entre 3000 et 25000.

5.  Support d'enregistrement magnétique flexible selon la revendication 1, caractérisé par le fait que le mélange utilisé pour la couche de dos contient encore jusqu'à 1,5 % en volume de suie.